# EUROPEAN PATENT APPLICATION

(11) **EP 4 807 325 A1**
(43) Date of publication of application: **16.09.2026**
(21) Application number: 25162565.3
(22) Date of filing: 10.03.2025
(51) Int. Cl.: G01C 21/30

(54) **METHODS AND SYSTEMS FOR MAP MATCHING**

(71) Applicant: TomTom Navigation B.V., 1011 AC Amsterdam (NL)
(72) Inventor: GEHRELS, Barend Sebastiaan, 1011 AC Amsterdam (NL)
(74) Representative: Bardehle Pagenberg Partnerschaft mbB Patentanwälte Rechtsanwälte

(57) **Abstract**

Described herein is a computer-implemented method for map matching geographic location points to a road network. The road network comprises road segments. The method comprises the step of providing a first set of match candidates each associated with a first geographic location point and one of the road segments. The method further comprises the step of providing a second geographic location point associated with geographic location point properties. The method further comprises the step of determining a second set of match candidates based at least in part on the first set of match candidates and the geographic location point properties associated with the second geographic location point. The second set of match candidates is associated with transitions from the first set of match candidates. The method further comprises the step of determining a matched location point based at least in part on the second set of match candidates. Further described herein are a system for map matching geographic location points to a road network, and a computer program.

## Description

### Field of the invention

The present invention relates to a computer-implemented method for map matching geographic location points to a road network, a system comprising means for performing said method, and a computer program comprising instructions which, when executed by a computer, cause the computer to perform said method.

### Technical background

A geographic location point is a specific point on the Earth's surface associated with a set of coordinates in a geographic coordinate system, typically latitude and longitude. Thus, geographic location points represent a form of spatial data that can be utilized in various applications such as navigation, mapping, and location-based services. In the field of navigation, for example, a geographic location point is associated with a map comprising a road network in order to provide a vehicle or the driver of a vehicle with information about their current location and a route to a destination. A typical use case for navigating on a map comprising a road network, for example, is to navigate a vehicle from a start location point to a destination location point via one or more road segments of the road network.

To acquire a current location of a vehicle on a map, it is known to measure, i.e., record, a current geographic location point. Geographic location points can be recorded using a global navigation satellite system (GNSS), such as the global positioning system (GPS), by utilizing a network of satellites that broadcast signals to the Earth, and exploiting the time it takes for the signal of different satellites to travel from the satellite to the current geographic location point. Other well-known examples for a GNSS are GLOS-NASS, Galileo, COMPASS, IRNSS, or the like.

GPS-enabled devices that can receive and process GPS signals to record geographic location points are becoming increasingly widespread and are by no means limited to dedicated portable navigation devices or onboard devices in vehicles anymore. Nowadays, GPS-enabled devices also include smartphones, smartwatches, and small devices such as GPS trackers or so-called GPS tags.

A geographic location point typically deviates from the exact "true" location point due to recording inaccuracies. How much a geographic location point deviates from the true location point therefore depends on the accuracy of the GNSS, for example GPS. The accuracy of GPS depends on several factors such as, for example, signal blockage and reflections (e.g., due to buildings), the design of the GPS-enabled device, and atmospheric conditions. While high-quality GPS-enabled devices can achieve accuracy of less than 1 meter under the most optimal conditions, typical consumer devices achieve accuracy of between 5 and 10 meters.

It is a problem that when navigating a vehicle in a road network, the recording inaccuracies may cause a geographic location point not to be positioned on a road segment of the road network. In other words, a geographic location point may not be associated with a road segment of the road network but with a location on the map where no road segment is present. Another problem is that road segments can be close to each other, for example in city centers, which can lead to a geographic location point being positioned on the wrong road segment of the road network. A driver could then, for example, be wrongly informed of their current location on no road segment or the wrong road segment.

Therefore, it is generally known to improve the accuracy of the association between a geographic location point and a map by using methods for so-called "map matching".

When navigating in a road network, map matching is the process of mapping one or more geographic location points to the road network. In other words, when a geographic location point is used as an input in a method for map matching, the map matching provides a corresponding matched location point on the road network. The matched location point is typically enriched with additional information, for example, a road segment identifier.

Existing methods for map matching can be divided into real-time and offline methods. Typically, a method for map matching performs either real-time or offline map matching. In real-time map matching, geographic location points are matched one by one, preferably during or immediately after their individual recording, i.e. as they become available. To be able to make an accurate determination of a map matched location point, it is typically required to keep track of at least a portion of the location point history of the vehicle. This may be done by storing previous geographic location points and/or associated map matched location points. In other words, existing methods typically must rely on one or more previous geographic locations points and/or associated map matched location points in addition to a current geographic location point. However, this approach can be a disadvantage, in particular when it is desirable to perform the map matching on a remote entity such as a server - in such a case, either the server must store the vehicle's location history (along with a vehicle or driver identifier), with each subsequent request then needing to be addressed to that particular server, or a vehicle must provide an extensive amount of contextual data every time it sends a map matching request to a server. In offline map matching, a trace of successively recorded geographic location points is matched after each geographic location point is available. Such a trace may be recorded or determined based on another source, such as a tour or a route. In offline map matching, a trace of successively recorded geographic location points is matched after each geographic location point is available. Such a trace may be recorded or determined based on another source, such as a tour or a route. Offline map matching therefore takes into account all geographic location points of a trace and hence does not allow "live" application but has higher accuracy. Offline methods are sometimes also referred to as "batch" methods. Real-time map matching allows "live" application at the cost of lower accuracy, because they only can consider current and previous geographic location points.

It is a disadvantage that existing map matching methods are not generic, i.e., they are either a real-time or offline method. Further, as indicated above, even real-time map matching methods typically rely on at least two geographic location points, typically including at least one previous geographic location point. Therefore, it is a disadvantage that existing map matching methods are not stateless, which complicates their deployment on remote entities, for example on multiple servers.

It is therefore an objective of the present disclosure to overcome these problems and disadvantages at least in part by providing a map matching method which allows for more versatility and easier deployment.

### Summary of the invention

A first aspect relates to a computer-implemented method for map matching geographic location points to a road network. The road network comprises road segments. The method comprises the step of providing a first set of match candidates each associated with a first geographic location point and one of the road segments. The method further comprises the step of providing a second geographic location point associated with geographic location point properties. The method further comprises the step of determining a second set of match candidates based at least in part on the first set of match candidates and the geographic location point properties associated with the second geographic location point. The second set of match candidates is associated with transitions from the first set of match candidates. The method further comprises the step of determining a matched location point based at least in part on the second set of match candidates.

Because the second set of match candidates is determined based on the first set of match candidates and the geographic location properties associated with the second geographic location point, the matched location point can be determined without relying on the availability of other information like the first geographic location point. In other words, with the method according to the first aspect it is not necessary to know more than the second geographic location point for determining the matched location point, as long as the first set of match candidates is provided. Thereby, aspects of the present disclosure may enable easier deployment.

The road network comprises road segments. The road network may comprise a plurality of road segments. The road segments may be associated with interconnected roads for vehicular traffic. A road segment may be a complete road or a part of a road. A road may be, for example, a highway, a multi-lane main road, a single-lane road, or a small side road. In other words, a road segment may be any logical subordinate of the road network. Road segments may be connected, for example, by junctions, exits, or intersections. Road segments may be associated with an allowed driving direction and/or a speed limit. In some embodiments, the road network and the road segments may also be associated with streets, bicycle lanes, or pedestrian walkways. It is hence understood that, for the purposes of the present disclosure, a road may be any means for enabling and routing spatial movement of vehicles. A vehicle within the meaning of the present disclosure may, for example, be a car, a truck, a bike, a bicycle, a scooter, a pedestrian, or the like.

The method comprises the step of providing a first set of match candidates each associated with a first geographic location point and one of the road segments. Hence, a match candidate is associated with a geographic location point and a road segment of the road network. In particular, a match candidate may link a geographic location point with a road segment. A set of match candidates may consist of one or more match candidates. A set of match candidates may be represented by data, for example in the form of a table, a database, or the like. Not every road segment of the road network must be associated with a match candidate in a set of match candidates. The total number of match candidates in a set of match candidates may be limited by a candidate threshold. For example, the total number of match candidates may be limited to a total number n of between 2 to 10, preferably 3 to 6. It is also possible that the candidate threshold is associated with road properties, which are further explained below. For example, the candidate threshold may be used to select the n road segments that are closest to a geographic location point.

The method further comprises the step of providing a second geographic location point associated with geographic location point properties. The second geographic location point may be recorded after the first geographic location point. The second geographic location point may be recorded with a GPS-enabled device or other known devices for GNSS-based location recording. It is also possible that a geographic location point is recorded by other known means for localizing a vehicle, for example a Wi-Fi positioning system (WPS), mobile communication base stations, an inertial navigation system (INS), LIDAR, a visual positioning system (VPS), or the like. While for simplicity this disclosure relates to localization using GPS, it is understood by a skilled person that other known forms of localization can also be used with aspects of this disclosure. The GPS-enabled device may be a built-in device or a handheld device. The second geographic location point may also be referred to as a next geographic location point, while the first geographic location point may also be referred to as a current geographic location point. In some embodiments, the geographic location point properties associated with the second geographic location point may comprise coordinates and/or a heading. Coordinates may be any set of values that define the position of a geographic location point on the Earth's surface, typically latitude and longitude that are associated with a geographic coordinate system. A heading may be the direction of a movement. For example, the heading may be associated with a reference direction, typically true north, and may range from 0° to 360°. In particular, the heading may be associated with a movement determined based on the first and the second geographic location points. In some embodiments, the geographic location point properties associated with the second geographic location point may further comprise a speed. Generally, speed may be defined as a rate of motion, i.e., a distance traveled per unit of time. Additionally, or alternatively, the geographic location point properties associated with the second geographic location point may comprise a slope and/or a GNSS presence. A slope may be a gradual ascent or descent of the Earth's surface. A GNSS presence may refer to the availability and/or reception of signals from a GNSS. In particular, a GNSS presence may be associated with a GPS quality.

Generally, "providing" in the context of the present disclosure may be, for example, understood as uploading, i.e., transferring data from a local network entity to a remote network entity, or downloading, i.e., making data available, by transferring data from a remote network entity to a local network entity. Providing, i.e., uploading or downloading, may be associated with a query to a network entity to perform one or more steps of the method. It is possible that several steps of the method are performed by different network entities. A network entity may be, for example, a vehicle that is connected to a network via known wireless communication technologies, or an onboard or portable navigation device, or a smartphone. Another network entity may be a server, in particular a server for cloud computing, that may store data and process queries of other network entities. The skilled person understands that providing certain data may also be achieved by sending or receiving in general. It is also appreciated that network entities may have a client-server relationship with each other. For example, a vehicle may represent a client that performs some or all of the steps of the method in cooperation with a server. However, it is of course also possible that all steps of the method are performed by a single network entity. In this case, providing may be understood as having certain data availably stored in a storage medium.

Generally, providing the first set of match candidates and the second geographic location point may comprise receiving or sending a message including the first set of match candidates and the second geographic location point. In some embodiments, a response message including the second geographic location point and/or the second set of match candidates may be sent or received.

The method further comprises the step of determining a second set of match candidates based at least in part on the first set of match candidates and the geographic location point properties associated with the second geographic location point. The second set of match candidates may also be referred to as a next set of match candidates comprising next match candidates, while the first set of match candidates may also be referred to as a current set of match candidates comprising current match candidates. In some embodiments, determining the second set of match candidates may be further based at least in part on road properties associated with the road segments. In particular, the road properties may comprise road segment coordinates and/or an allowed driving direction. Coordinates of a road segment may be one set of coordinate values associated with a starting location of the road segment, or coordinates of a road segment may also be referred to as multiple sets of coordinate values associated with the locations of the road segment on the map comprising the road network. The allowed driving direction may be a specific direction on the road segment in which vehicles are permitted to travel.

The second set of match candidates is associated with transitions from the first set of match candidates. The transitions may be associated with possible and/or allowable routes between the road segments that are associated with the first and the second set of match candidates. For example, a given match candidate in the second set of match candidates may be associated with transitions from one or more match candidates in the first set of match candidates. Although possible, not every match candidate in the second set of match candidates must be associated with a transition from every match candidate in the first set of match candidates. Whether or not a transition from a given match candidate in the first set of matches to a given match candidate in the second set of matches is considered may depend on, for example, the distance over the road network between the associated location points, the allowable driving direction, the speed, the speed limit, or the like. It is also possible that in a first sub step all possible transitions are considered, i.e., a transition from every match candidate in the first set of match candidates to every match candidate in the second set of match candidates. In a second sub step, some transitions may be deemed implausible and may hence be omitted. The decision on implausibility of a transition may be determined based on, for example, the distance over the road network between the associated match candidates, the allowable driving direction, the speed, the speed limit, or other road and/or geographic location point properties.

The method further comprises the step of determining a matched location point based at least in part on the second set of match candidates. In some embodiments, determining the matched location point may be performed by a server. For example, the steps of providing the first set of match candidates and providing the second geographic location point may be performed by uploading from a vehicle to a server. The server may then perform the steps of determining the second set of match candidates and determining the matched location point. In other embodiments, determining the matched location point may be performed by a vehicle. For example, the steps of providing the first set of match candidates and providing the second geographic location point may be performed by uploading from a vehicle to a server. The server may then perform the step of determining the second set of match candidates, while the vehicle may perform the step of determining the matched location point.

In some embodiments, a match candidate may comprise an identification of a road segment of the road network. The identification may be a road identifier and/or a road name. Additionally, a match candidate may comprise an offset along the road segment. For example, the offset may be associated with a distance in meters and/or a fraction of the total length of the road segment and may be associated with a starting and/or end point of the road segment.

Generally, each match candidate in the first and the second set of match candidates may be associated with a confidence score. A confidence score may be a numerical value that represents a level of certainty or reliability. In some embodiments, determining the second set of match candidates may be further based at least in part on the confidence scores associated with the match candidates in the first set of match candidates.

The candidate threshold introduced above may be associated with a minimum confidence score that a potential match candidate must reach to be added to a set of match candidates. It is also possible that the n match candidates with the highest confidence scores are forming a set of match candidates. For example, the *n*=3 match candidates with the highest confidence scores may form a set of match candidates.

The confidence score associated with each of the match candidates in the second set of match candidates may be determined based at least in part on the confidence scores associated with the match candidates in the first set of match candidates.

The confidence score associated with a given match candidate in the second set of match candidates may be based at least in part on a probability for a transition from each match candidate in the first set of match candidates to a road segment associated with the given match candidate. In this regard, a higher probability may be associated with a higher confidence score. In some embodiments, determining the matched location point may comprise selecting a match candidate associated with a highest confidence score. In some embodiments, a confidence score for a given match candidate is determined based on a combination of the confidence score for each match candidate in a previous set of match candidates and a transition probability from each of the match candidates in the previous set of match candidates to the given match candidate. Aspects of the present disclosure thereby may enable real-time map matching for live applications. It is also possible that the confidence score for a given match candidate is determined based at least in part on a distance to a geographic location point, and - for each match candidate in the previous set of match candidates - both the confidence score of the match candidate and the transition probability from the match candidate.

In some examples, determining the second set of match candidates may further be based at least in part on using the first set of matches, the second geographic location point, and the confidence scores of the match candidates in the first set of matches as an input for a probabilistic graphical model. The probabilistic graphical model may be a Bayesian network, a hidden Markov model, or the like.

In some embodiments, further sets of match candidates may be determined for map matching successively recorded geographic location points. A next set of match candidates may be determined based at least in part on a current set of match candidates, the geographic location point properties associated with a next geographic location point, and the confidence scores associated with the match candidates in the current set of match candidates. The next set of match candidates may be associated with transitions from the current set of match candidates. In particular, a graph may be constructed of the sets of match candidates, the transitions, and the confidence scores associated with the match candidates in the sets of match candidates. The skilled person appreciates that the match candidates may be the vertices, and the transitions the edges of the constructed graph. For each geographic location point, a matched location point may be determined based at least in part on the total graph. The method thereby may enable offline map matching with improved accuracy.

Because the method according to the first aspect enables real-time and offline map matching, the method may improve versatility.

Generally, providing the second geographic location point may comprise selecting a geographic location point from a trace of geographic location points. A trace may be referred to as a finite set of successively recorded geographic location points. For example, a trace may be associated with a tour or a route of a vehicle. A tour may be a terminated sequence of recorded geographic location points. In one example, a route may be planned on a map comprising the road network. In this case, the geographic location points may not be recorded by a GPS-enabled device but directly provided by means for selecting them on the road network and/or a map. For example, the route may be planned by selecting locations on the map by clicking on a screen. The trace may be stored on a memory, enabling later (offline) map matching. A memory may also be referred to as a computer-readable medium.

Generally, the matched location point may be displayed on a screen. Additionally, or alternatively, the matched location point may be used for a navigation function and/or used as an input for a driver-assistance system. For example, the screen may be a screen of a navigation system. The navigation system may be built in a vehicle, portable, or implemented in a smartphone or the like. The screen may further comprise a graphical user interface (GUI). The matched location point may be displayed on the screen by means of a GUI element. A GUI element may be a dot, an arrow, a depiction of a car, or the like. The GUI element may be shown on a map on the screen. The GUI element may further indicate a heading. In one example, the GUI element may comprise an element for indicating a moving direction.

A second aspect relates to a system for map matching geographic location points to a road network. The road network comprises road segments. The system comprises means for providing a first set of match candidates each associated with a first geographic location point and one of the road segments. The system further comprises means for providing a second geographic location point associated with geographic location point properties. The system further comprises means for determining a second set of match candidates based at least in part on the first set of match candidates and the geographic location point properties associated with the second geographic location point. The second set of match candidates is associated with transitions from the first set of match candidates. The system further comprises means for determining a matched location point based at least in part on the second set of match candidates.

Means for providing the first set of match candidates and/or the second geographic location point may be referred to as a providing unit or a processing unit that is configured accordingly. A providing unit may be any known means for internal and/or external data communication. In some embodiments, the providing may be performed by a processor that is configured for reading/writing data from/to a memory and/or a communication unit, or the like. In some embodiments, the means for providing may be comprised by a vehicle and/or a server.

Means for determining the second set of match candidates and/or the matched location point may be referred to as a processing unit. In particular, means for determining in this context may be a processor that is configured accordingly.

A client may comprise means for communication, in particular wireless communication, and may be connected to a network. The client thereby may be a network entity. A server may also comprise means for communication, in particular wireless communication, and may be connected to the network, and may therefore also be a network entity. The client and the server may be connected via the network to form the client-server-system. A client-server-system may be a system for map matching according to the second aspect. Both the client and the server may comprise the means for providing the first set of match candidates and/or the second geographic location point; and/or the means for determining the second set of match candidates and/or the matched location point.

In one embodiment, the client may provide the first set of match candidates and the second geographic location point to the server. It is also possible that the server provides the first set of match candidates and the second geographic location point by requesting them from the client. The confidence scores associated with the match candidates in the second set of match candidates may also be provided in this context. The server may determine the second set of match candidates based on the first set of match candidates and the geographic location point properties associated with the second geographic location point. The server may further determine the matched location point based on the second set of match candidates. It is also possible that the client determines the matched location point based on the second set of match candidates. The server may send the determined second set of match candidates and/or the matched location point to the client. Because the server determines the second set of match candidates based on the first set of match candidates and the geographic location point properties associated with the second geographic location point, the server does not need to have any information about other geographic location points or sets of match candidates. In particular, the server does not need to know the first (or any earlier) geographic location point. Thereby, the system according to the second aspect may enable stateless map matching. In one example, the client may provide a previous set of match candidates and the first geographic location point to a first server for map matching and may subsequently provide the first set of match candidates and the second geographic location point to a second server for map matching. Stateless map matching may hence enable that each iteration of map matching a geographic location point to a matched location point can be performed by a different server that is connected to the client. The system thereby may simplify deployment of map matching methods, for example to multiple servers for cloud computing.

A third aspect relates to a computer program comprising instructions which, when executed by a computer, cause the computer to perform the above-described method for map matching geographic location points to a road network.

Whether aspects are implemented as hardware or software means depends upon the particular application and design constraints imposed on the overall system. By way of example, an element, or any portion of an element, or any combination of elements may be implemented as a processing system that may include one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

It is noted that any combination of features that have been described above as belonging to certain embodiments/aspects of the present invention is also an embodiment of the present invention, provided such a feature combination is feasible, i.e., does not lead to any contradictions.

### Short description of the figures

In the following, exemplary embodiments of the invention are described with reference to the following figures:
- Fig. 1:: a road network with an illustration of an accuracy of a geographic location point;
- Fig. 2:: a road network with geographic location points and sets of match candidates;
- Fig. 3:: sets of match candidates depicted as tables;
- Fig. 4:: a road network with matched location points;
- Fig. 5:: a graph of sets of match candidates with transition;
- Fig. 6:: a road network with a trace of geographic location points;
- Fig. 7:: a road network with a trace of matched location points;
- Fig. 8:: a method according to an embodiment;
- Fig. 9:: a system according to an embodiment;
- Fig. 10:: a client-server-system according to an embodiment;
- Fig. 11:: a screen displaying a road network with a matched location point.

### Detailed description of preferred embodiments

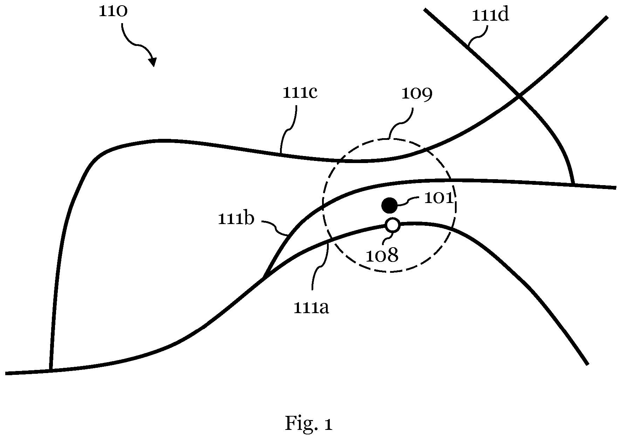

Figure 1 shows a road network 110 with interconnected roads for vehicular traffic. In the depicted example, the road network 110 comprises a plurality of road segments 111a-111d. Road segment 111a is a multi-lane main road from which single-lane road segments 111b and 111c branch off. Road segment 111d is a small side road which connects road segments 111b and 111c and passes road segment 111c by forming an intersection with the same. In this example, the road segments 111a-111d do not end in the area shown but continue into areas not shown in Figure 1.

A vehicle drives on the road network 110, which is located on the road segment 111a at a true location point 108 at the time shown. The vehicle has a built-in and GPS-enabled navigation device for locating the vehicle. With the GPS-enabled navigation device, a first geographic location point 101 is recorded. Due to high buildings around the road segments 111a and 111b, the accuracy of the GPS location is impaired, which leads to a deviation between the (recorded) first geographic location point 101 and the true location of the vehicle at true location point 108. A confidence area 109 around the geographic location point 101 represents an area in which the vehicle is located with a probability of at least 95%. As can be seen, because the confidence area 109 encompasses multiple road segments 111a-111c, it is not easy to determine on which of the road segments 111a, 111b, or 111c the vehicle is currently driving on. In other words, each of the road segments 111a, 111b, and 111c can be associated with a match candidate. However, in this example, it can already be excluded with a high degree of certainty that the vehicle is currently driving on road segment 111d.

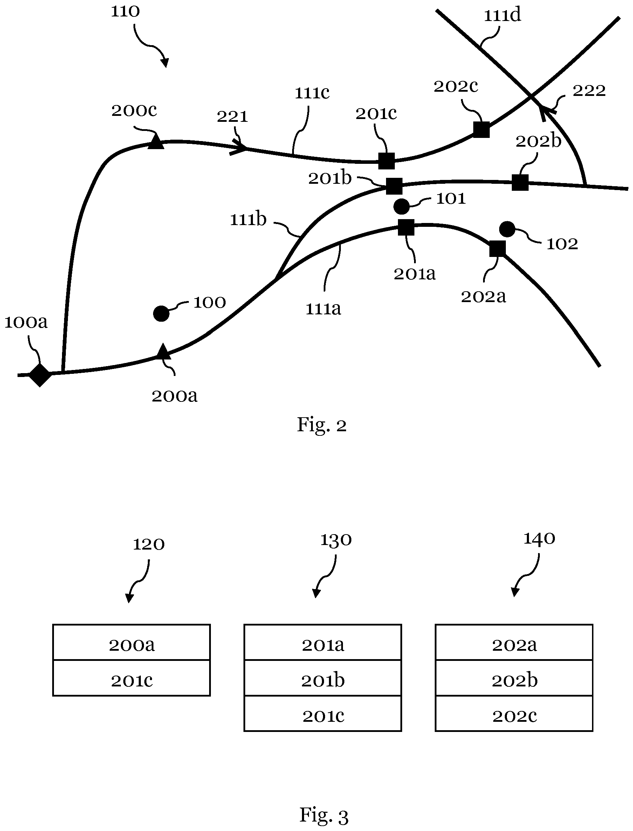

Figure 2 shows the road network 110 of Figure 1 with the first geographic location point 101. A first set of match candidates 130 comprises the match candidates 201a, 201b, and 201c. Each of the match candidates 201a, 201b, and 201c is associated with the first geographic location point 101 and one of the road segments 111a-111d. In particular, match candidate 201a is associated with road segment 111a, match candidate 201b is associated with road segment 111b, and match candidate 201c is associated with road segment 111c. With the prior constraint that the vehicle is assumed to be driving on one of the road segments 111a, 111b, or 111c, the first set of match candidates 130 therefore is associated with possible true locations of the vehicle. In other words, at least one of the match candidates 201a, 201b, or 201c is assumed to be located closer to the true location 108 of the vehicle than the first geographic location point 101 is.

A second geographic location point 102 is recorded with the GPS-enabled navigation device of the vehicle at a later time after the recording of the first geographic location point 101. Therefore, the first geographic location point 101 can be seen as a "current" geographic location point, while the second geographic location point 102 can be seen as a "next" geographic location point. Like the first geographic location point 101, the second geographic location point 102 is not located exactly at the next true location point of the vehicle (not shown).

The second geographic location point 102 is associated with geographic location point properties. The geographic location point properties comprise the coordinates of the second geographic location point 102. In another example, the geographic location point properties additionally comprise a heading. The coordinates of the second geographic location point 102 are associated with a geographic coordinate system and comprise latitude and longitude. The heading is determined based on the movement that is associated with the first geographic location point 101 and the second geographic location point 102. The road network 110 in the shown example is depicted as north-oriented. Therefore, the heading is approximately eastwards.

A second set of match candidates 140 is determined based on the first set of match candidates 130 and the geographic location point properties associated with the second geographic location point 102. The second set of match candidates 140 is associated with transitions from the first set of match candidates 130. Determining the second set of match candidates 140 therefore does not need to take into account the first geographic location point 101.

The second set of match candidates 140 comprises the match candidates 202a, 202b, and 202c. Each of the match candidates 202a, 202b, and 202c is associated with the second geographic location point 102 and one of the road segments 111a-111d. In particular, match candidate 202a is associated with road segment 111a, match candidate 202b is associated with road segment 111b, and match candidate 202c is associated with road segment 111c. In this example, there is no match candidate considered for road segment 111d because the transition from each of the match candidates in the first set of match candidates 130 to road segment 111d is deemed implausible based on the distance the vehicle would have to travel on the road network. It is further only permitted to drive on road segment 111d from road segment 111b in the direction of road segment 111c, as indicated by the allowed driving direction 222. The allowed driving direction 222 is a road property associated with the road segment 111d. Further, the allowed driving direction 221 is a road property associated with the road segment 111c. As can be seen, match candidate 202a is associated with plausible transitions from match candidates 201a and 201b, match candidate 202b is associated with transitions from match candidates 201b and 201a, and match candidate 202c is associated with a transition from match candidate 201c. In particular, due to the allowed driving directions 221 and 222, there is in this example no transition deemed plausible from match candidate 201c to match candidate 202b. There is further no transition deemed plausible from match candidates 201a and 201b to match candidate 202c due to the distance the vehicle would have to travel on the road network.

Figure 2 further depicts a "previous" set of match candidates 120 comprising match candidates 200a and 200c. The previous match candidates 200a and 200c are associated with the "previous" geographic location point 100 that was recorded at a point in time before the first geographic location point 101. Here, match candidates 201a and 201b are both associated with a plausible transition from the previous match candidate 200a. Match candidate 201c is associated with a plausible transition from the previous match candidate 200c. A transition from previous match candidate 200a to match candidate 201c is deemed implausible based on the distance the vehicle would have to travel on the road network. The same applies to the implausible transitions from previous match candidate 200c to match candidates 201a and 201b, also considering the allowable driving directions 221 and 222. It is important to realize that the previous set of match candidates 120 is not needed to determine the second set of match candidates 140 based on the first set of match candidates 130 and the geographic location point properties associated with the second geographic location point 102. This is because the method considers the first set of match candidates 130, rather than a matched point. The first set of match candidates 130, particularly due to the associated confidence scores as explained below, implicitly contains information about all previous sets of candidates. This is because the composition of the first set of match candidates 130, an in particular the confidence scores, could have been different if the previous set of match candidates 120 had been different, and so forth.

In one embodiment, the second set of match candidates 140 is associated with road segments 111a, 111b, and 111c that minimize a distance to the coordinates of the second geographic location point 102.

In another embodiment, determining the second set of match candidates 140 is further based on road properties, for example, associated with the road segments 111c and 111d. Match candidate 202c is deemed to be a possible match candidate by comparing the heading of the second geographic location point 102 with allowable driving direction 221 and coordinates of the road segment 111c.

In one embodiment, the geographic location point properties associated with the second geographic location point 102 further comprise a speed and a slope. In one example, determining the second set of match candidates 140 is then further based in part on the speed by determining a travel distance on each road segment 111a, 111b, and 111c based on the distance from the first geographic location point 102 to the second geographic location point 102. Determining the travel distance is further based in part on the slope associated with the second geographic location point 102. In another embodiment, the geographic location point properties associated with the second geographic location point 102 further comprise a GNSS presence. Here, the GNSS presence is associated with a GPS signal quality. A confidence area (not shown) around the second geographic location point 102 is determined based on the GNSS presence, like the confidence area 109 around the first geographic location point 101 shown in Figure 1. In this example, determining the second set of match candidates 140 is based in part on the GNSS presence by incorporating road segment 111c because the GPS signal quality is so low that the confidence area around the second geographic location point 102 also encompasses the part of the road segment 111c where match candidate 202c is located.

In one embodiment, the match candidates 201a-201c and 202a-202c each comprise an identification of a road segment 111a-111d of the road network 110. In a preferable embodiment, the match candidates 201a-201c and 202a-202c further comprise an offset along said road segment. For example, the match candidates 201a and 202a both comprise an ID or a name of the road segment 111a as identifier. The offset along the road segment 111a is different for the match candidates 201a and 202a. In particular, the road segment 111a begins in the west of the road network 110 depicted in Figure 2, near the initial match candidate 100a. Therefore, the offset along the road segment 111a of the match candidate 202a is larger than the offset along the road segment 111a of the match candidate 201a. In one example, the identifiers and the offsets are used to define a location of each match candidate on their associated road segment.

Figure 3 shows the previous set of match candidates 120, the first set of match candidates 130, and the second set of match candidates 140 in the form of tables. The tables shown represent data that can be stored on a memory and transmitted between network entities such as senders and receivers by means of a message.

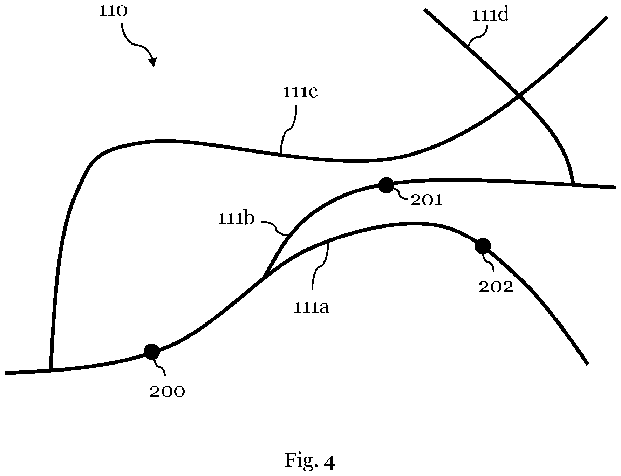

Figure 4 shows the road network 110 of Figures 1 and 2 with a matched location point 202 and a previous matched location point 201. The matched location point 202 is determined based at least in part on the second set of match candidates 140 depicted in Figure 2. The previous matched location point 201 was determined previously based at least in part on the first set of match candidates 130. As can be seen by comparing with Figure 2, the matched location point 202 is located at the same position on the road segment 111b as the matching candidate 202a. The previous matched location point 201 is located at the same position on the road segment 111b as the matching candidate 201b. Another previous matched location point 200 was determined previously (i.e. before previous matched location point 201) based at least in part on the previous set of match candidates 120. As can be seen by comparing with Figure 2, the previous matched location point 200 is located at the same position on the road segment 111a as the matching candidate 200a.

It should be realized that determining the second set of match candidates 140 based on the first set of match candidates 130 and the geographic location point properties associated with the second geographic location point 102 does not need any specific knowledge about the previous matched location points 200 and 201.

In one embodiment, each match candidate in the first and the second set of match candidates 130, 140 is associated with a confidence score. In an example, the confidence score is a number between 0 and 1, and normalized with respect to all match candidates in the first and second match candidates 130, 140, respectively.

In one embodiment, determining the second set of match candidates 140 is further based in part on the confidence scores associated with the match candidates 201a-201c in the first set of match candidates 130. Further, in a preferable embodiment, determining the confidence scores associated with the match candidates 202a-202c in the second set of match candidates 140 is based in part on the confidence scores associated with the match candidates 201a-201c in the first set of match candidates 130.

Considering Figure 2 again, for the following examples, we assume that the "true" route of the vehicle started at the initial match candidate 100a, and that the vehicle then travelled to match candidate 202a via the match candidates 200a and 201a. Hence, previous matched location point 200 was correctly determined, whereas the previous matched location point 201 was not correct in that the vehicle stayed on road segment 111a and did not drive on road segment 111b. The matched location point 202 is assumed to be correct again, as further explained below.

In one example, the confidence score associated with a given match candidate in the second set of match candidates 140 is based in part on a probability for a transition from each match candidate 201a-201c in the first set of match candidates 130 to a road segment 111a-111d associated with the given match candidate. In one example, the transition probability is based on the distance the vehicle would have to travel over the road network 110. In other examples, road properties and/or geographic location point properties may also be considered when determining a probability for a transition. In a particular example, the given match candidate is match candidate 202b in the second set of match candidates 140. The probability for a transition from each match candidate 201a-201c in the first set of match candidates 130 is then as follows (from most probable to least probable): the transition from match candidate 201b; the transition from match candidate 201a; and the transition from match candidate 201c. The transition from match candidate 201c is least probable because of the distance on the road network 110 and the allowed driving directions 221 and 222 on road segments 111c and 111d, respectively, that do not permit a transition from match candidate 201c to match candidate 202b. The transition from match candidate 201a is further less probable than the transition from match candidate 201b due to the significantly longer distance on the road network 110.

In another particular example, the given match candidate is match candidate 202a in the second set of match candidates 140. The probability for a transition from each match candidate 201a-201c in the first set of match candidates 130 is then ranked as follows (from most probable to least probable): the transition from match candidate 201a; the transition from match candidate 201b; and the transition from match candidate 201c. The ranking is considered based on the distance the vehicle would have to travel on the road network 101 as well as the allowed driving directions 221 and 222.

In one example, the confidence score for the match candidate 202a is determined based on a combination of the confidence score for each match candidate 201a-201c in the first set of match candidates 130 and a transition probability from each of the match candidates 201a-201c in the first set of match candidates 130 to the match candidate 202a. In particular, the confidence score for the match candidate 202a can be determined based at least in part on the distance to the second geographic location point 102, and - for each match candidate in the first set of match candidates 130 - both the confidence score of the match candidate and the transition probability from the match candidate.

In one example, determining the second set of match candidates 140 is further based on using the first set of matches 130, the second geographic location point 102, and the confidence scores of the match candidates in the first set of matches 130 as an input for a hidden Markov model.

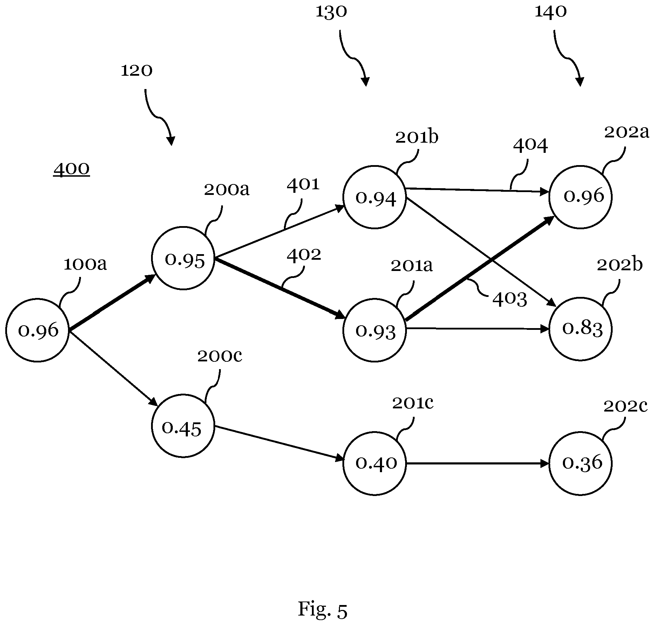

In one example, the match candidate 202a has the highest confidence score and determining the matched location point 202 comprises selecting the match candidate 202a with the highest confidence score. This is particularly suitable for real-time map matching. Match candidate 202a may be associated with the highest confidence score, because although match candidate 201b is associated with the previous matched location point 201, and the transition from match candidate 201b to match candidate 202b is deemed to be the most probable transition, the confidence score is adjusted - inter alia - based on the direct distance to the second geographic location point 102. Thereby, the method may achieve a real-time correction of the wrongly determined previous matched location point 201. In this regard, it is important to note that the reason that match candidate 202a is more likely than match candidate 202b may not solely be based on the lesser distance. It is also possible that match candidates 201a and 201b had very similar confidence scores (see Figure 5, as explained below), wherein the confidence score of match candidate 201b was only slightly higher. Therefore, match candidate 202a is close to the second geographic location point 102, but also, from the first set of match candidates 130, there was a high chance the previous position was match candidate 201a, and there is a highly likely transition from match candidate 201a to match candidate 202a. If match candidate 201a had not been in the previous set, or had a much lower confidence score, then even with the second geographic location point 102 being closer to match candidate 202a than to match candidate 202b, the total confidence score for match candidate 202b could still have been higher.

Figure 5 shows a graph 400 constructed of the first and the second sets of match candidates 130, 140, as well the previous set of match candidates 120, and the initial match candidate 100a. The graph 400 is further constructed with the plausible transitions from a given set of match candidates to the next set of match candidates. The graph 400 is hence constructed by considering the match candidates as vertices and the plausible transitions as edges of the graph 400. The plausible transitions in the graph 400 become apparent when considering Figure 2 and the statements above regarding their respective (im-)plausibility. Starting at the initial match candidate 100a, there are two plausible transitions, one to match candidate 200a via road segment 111a, and one to match candidate 200c via road segment 111c. At match candidate 200c, there is only one plausible transition to match candidate 201c, because of the allowed driving direction 221 on road segment 111c. The same applies to match candidate 201c, where only one transition is plausible to match candidate 202c. At match candidate 200a, there are two plausible transitions, transition 401 to match candidate 201b via road segment 111b, and transition 402 to match candidate 201a via road segment 111a. The transition from match candidate 200a to match candidate 201c is deemed implausible because of the distance on the road network between them. At match candidate 201a, there are two plausible transitions, transition 403 to match candidate 202a, and a transition to match candidate 202b. The transition from match candidate 201a to match candidate 202c is deemed implausible because of the distance on the road network between them. At match candidate 201b, there are two plausible transitions, a transition to match candidate 202b, and transition 404 to match candidate 202a. The transition from match candidate 201b to match candidate 202c is deemed implausible because of the distance on the road network between them.

The graph 400 further includes the confidence scores of the match candidates. Within each set of match candidates, the match candidates are sorted by their individual confidence score with the match candidate having the highest confidence score being at the top. Considering the previous set of match candidates 120, match candidate 200a has the highest confidence score of 0.95 because of a high transition probability from the initial match candidate 100a - due to the smaller distance on the road network and the smaller distance to the previous geographic location point 100). Match candidate 200c has a confidence score of only 0.45 due to the larger distance on the road network and the larger distance to the previous geographic location point 100. Considering the first set of match candidates 130, match candidate 201b has the highest confidence score of 0.94; match candidate 201a has a confidence score of 0.93; and match candidate 201c has the lowest confidence score of 0.40. Considering the second set of match candidates 140, match candidate 202a has the highest confidence score of 0.96; match candidate 202b has a confidence score of 0.83; and match candidate 202c has the lowest confidence score of 0.36. As can be seen, performing real-time map matching where the matched location points 200, 201, 202 may be selected based on the match candidate with the highest confidence score per set of match candidates, matched location point 201 would be wrongly selected because the vehicle stayed on road segment 111a in the shown examples. However, the real-time application of the method provided an ad hoc correction of the selection error because in a next iteration the matched location point 202 was correctly selected. This ad hoc correction is possible because the determination of the matched location point 202 is based, in part, on a set, i.e., the first set of match candidates 130, rather than solely on a single geographic location point or the matched location point 201. In particular, it can be seen in Figure 5 that match candidates 201a and 201b have confidence score that are very similar, with the confidence score of match candidate 201b being only 0.01 higher than the confidence score of match candidate 201a. Therefore, as stated above, there was already a high chance that match candidate 201a was the correct position, and there is a highly likely transition from match candidate 201a to match candidate 202a. Based on the confidence scores of the second set of match candidates 140, it can then be determined that the transition 403 from match candidate 201a to match candidate 202a is indeed the correct transition, so that match candidate 201a was the correct previous position.

Further, the advantage of such a real-time application of the method is that a matched location point can be determined based solely on one set of match candidates and one geographic location point, i.e., without having specific knowledge about any previous matched location points or set of match candidates. This "statelessness" may simplify deployment on remote entities, for example on multiple servers.

The above method may be iterated, wherein further sets of match candidates for map matching successive geographic location points are successively determined, each based on an immediately preceding set of match candidates and a subsequent geographic location point. While it is therefore not necessary to consider the full history a vehicle's location, in embodiments particularly suitable for offline map matching, the set of match candidates (and, preferably, associated match candidates) can be stored to allow for a (re-)determination of matches based on a trace 500 (see further below). In general, a next set of match candidates is determined based at least in part on a current set of match candidates, the geographic location point properties associated with a next geographic location point, and the confidence scores associated with the match candidates in the current set of match candidates, wherein the next set of match candidates is associated with transitions from the current set of match candidates. The graph 400 may then be constructed of the sets of match candidates, the transitions, and the confidence scores associated with the match candidates in the sets of match candidates. A matched location point is then determined for each geographic location point based in part on the total graph 400. Graph 400 is a total graph, because it comprises the sets of match candidates and transitions associated with a complete route through the road network 110.

In Figure 5, the optimal transitions through the total graph 400 are highlighted by thick lines. The optimal transitions are associated with the true route that the vehicle has been taken through the road network 110, as explained above. In particular, based on the total graph 400, the following match candidates are selected: 100a, 200a, 201a, 202a. In other words, matched location points are determined that are associated with the match candidates 100a, 200a, 201a, and 202a. Hence, in an embodiment where a matched location point is determined for each geographic location point based in part on the total graph 400, the matched location points may not always be associated with the match candidate with the highest confidence score within one set of match candidates. In particular, although match candidate 201b has a higher confidence score than match candidate 201a, at match candidate 200a the transition 402 to match candidate 201a is considered to be optimal and selected based on the total graph 400, because match candidate 202a has the highest confidence score in the second set of match candidates and the transition 403 is considered to be much more probable than the transition 404, as explained above. In other words, among the first set of match candidates 130, when considering the transition both with the preceding set of match candidates 120 and the second, i.e., the next set of match candidates 140, the sequence 200a-201a-202a is the most probable.

Therefore, in this example, an embodiment performing real-time map matching based on the highest confidence score per set of match candidates leads to different matched location points than an embodiment performing offline map matching based on the total graph 400. It should be noted that although the transitions 402 and 403 are correct, i.e., the vehicle indeed stayed on road segment 111a, the total graph 400 is needed for their selection. In other words, the offline embodiment relies on all sets of match candidates. On the other hand, an embodiment performing real-time map matching based on the highest confidence score per set of match candidates leads to selecting the (wrong) match candidate 201b that is then ad-hoc-corrected by selecting the (correct) match candidate 202a in the next iteration. Although transition 401 is not correct, the embodiment performing real-time map matching can determine a next matched location point based solely on a current set of match candidates and a next geographic location point, i.e., without waiting for the availability and the construction of the total graph. Due to its "generic" nature, i.e., the disclosed method can be used for both offline and real-time map matching, the disclosed method may provide a tradeoff between processing speed and accuracy, thereby enhancing the flexibility of map matching.

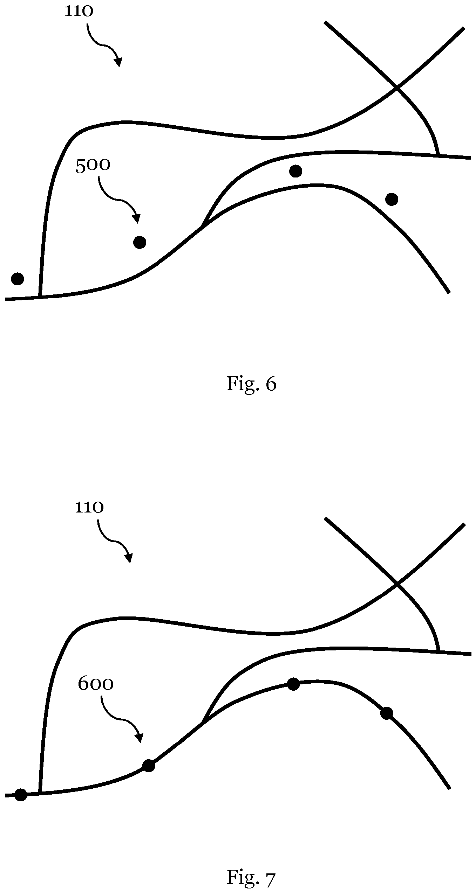

Figure 6 shows the road network 110 with a trace 500 of geographic location points. The trace consists of successively recorded geographic location points. The trace is stored on a memory for later map matching. In one embodiment, the trace is associated with a journey of the vehicle. A journey may be associated with traveling from one location to another through the road segment 110, typically involving a planned route or unplanned "free" driving. In another embodiment, the trace is associated with a route that has been planned on a map comprising the road network 110.

Figure 7 shows the road network 110 with a matched trace 600 of matched location points. The trace 600 of matched location points has been determined based on graph 400, as explained above.

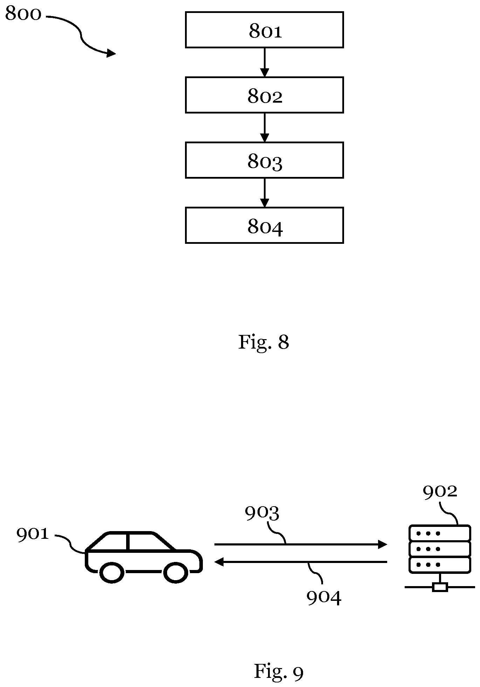

Figure 8 shows a flowchart of a computer-implemented method 800 for map matching geographic location points to a road network according to an embodiment. The method 800 comprises the step of providing 801 the first set of match candidates 130 each associated with the first geographic location point 101 and one of the road segments 111a-111d of the road network 110. The method 800 further comprises the step of providing the second geographic location point 102 associated with geographic location point properties. The method 800 further comprises the step of determining the second set of match candidates 140 based at least in part on the first set of match candidates 130 and the geographic location point properties associated with the second geographic location point 102, wherein the second set of match candidates 140 is associated with transitions from the first set of match candidates 130. The method 800 further comprises the step of determining the matched location point 202 based at least in part on the second set of match candidates 140.

Figure 9 shows a system comprising means for performing method 800. The vehicle 901 comprises means for wireless communication and is connected to a network. The vehicle 901 therefore is a network entity. The server 902 is also connected to the network and therefore also a network entity. The vehicle 901 and the server 902 are connected via the network. The vehicle 901 is a client of the server 902. The vehicle 901 and the server 902 form a client-server-system.

In one embodiment, the vehicle 901 provides the first set of match candidates 130 and the second geographic location point 102 to the server by sending a message 903 to the server 902. The message 903 also includes the confidence scores of each of the match candidates in the first set of match candidates 130. In other words, the vehicle 901 uploads the message 903 to the server 902. The server 902 receives the message 903. The server 902 determines the second set of match candidates 140 based on the first set of match candidates 130 and the geographic location point properties associated with the second geographic location point 102. The server 902 further determines matched location point 202 based on the second set of match candidates 140. The server 902 sends a response message 904 to the vehicle 901 including the matched location point 202. Because the server determines the second set of match candidates 140 based on the first set of match candidates 130 and the geographic location point properties associated with the second geographic location point 102, and determines the matched location point 202 based on the second set of match candidates 140, the server 902 does not need to have any information about other geographic location points or sets of match candidates. In particular, the server 902 does not need to know the first geographic location point 101, the previous set of match candidates consisting of match candidates 200a and 200c, or initial match candidate 100a. Thereby, the disclosed method 800 enables stateless map matching. In one example, the vehicle 901 provides the previous set of match candidates and the first geographic location point 101 to a first server for map matching, and subsequently provides the first set of match candidates 130 and the second geographic location point 102 to a second server for map matching. Stateless map matching hence enables that each iteration of map matching a geographic location point to a matched location point can be performed by a different server that is connected to the vehicle 901. The method 800 thereby simplifies deployment of map matching methods in the cloud.

In another embodiment, the vehicle 901 provides the first set of match candidates 130 and the second geographic location point 102 to the server by sending the message 903 to the server 902. The server 902 receives the message 903. The server 902 then determines the second set of match candidates 140 based on the first set of match candidates 130 and the geographic location point properties associated with the second geographic location point 102. The server 902 then sends a response message 904 including the second set of match candidates 140 to the vehicle 901. Thereby, the vehicle 901 is able to store the second set of match candidates 140 in a memory for later map matching. The vehicle 901 then determines the matched location point 202 based on the second set of match candidates 140, for example based on real-time or offline map matching as explained above. The method 800 hence enables generic map matching, i.e. real-time and offline map matching based on the same method. Thereby, aspects of the present disclosure provide increased versatility.

In another embodiment, the server 902 provides the first set of match candidates 130 and the second geographic location point 102 by sending a request message to the vehicle 901. Following the request message, the vehicle then sends a reply message to the server 902 comprising the first set of match candidates 130 and the second geographic location point 102. In other words, the server 902 downloads the first set of match candidates 130 and the second geographic location point 102 from the vehicle 901. In this example, the step of providing the first set of match candidates 130 and the second geographic location point 102 is hence associated with the sub-steps of sending/receiving the request message and receiving/sending the reply message. The server 902 then determines the second set of match candidates 140 based on the first set of match candidates 130 and the geographic location point properties associated with the second geographic location point 102. The server 902 then either sends a response message 904 including the second set of match candidates 140 to the vehicle 901, or determines the matched location point 202 based on the second set of match candidates 140 and sends a response message 904 including the matched location point 202 to the vehicle 901.

In one embodiment, the vehicle 901 sends a message 903 to the server, wherein the message 903 comprises a trace 500 of geographic location points that have been recorded by the vehicle. In this example, the step of providing the second geographic location point 102 comprises selecting a geographic location point from the trace 500 of geographic location points. The server 903 successively map matches each geographic location point in the trace 500 and sends the matched trace 600 back to the vehicle 901.

In another embodiment, the server 902 determines every set of match candidates associated with the trace 500 and sends all sets of match candidates back to the vehicle 901.

In another embodiment, the server sends back a graph 400 to the vehicle, wherein the graph 400 is constructed of all the sets of match candidates that are associated with the trace 500.

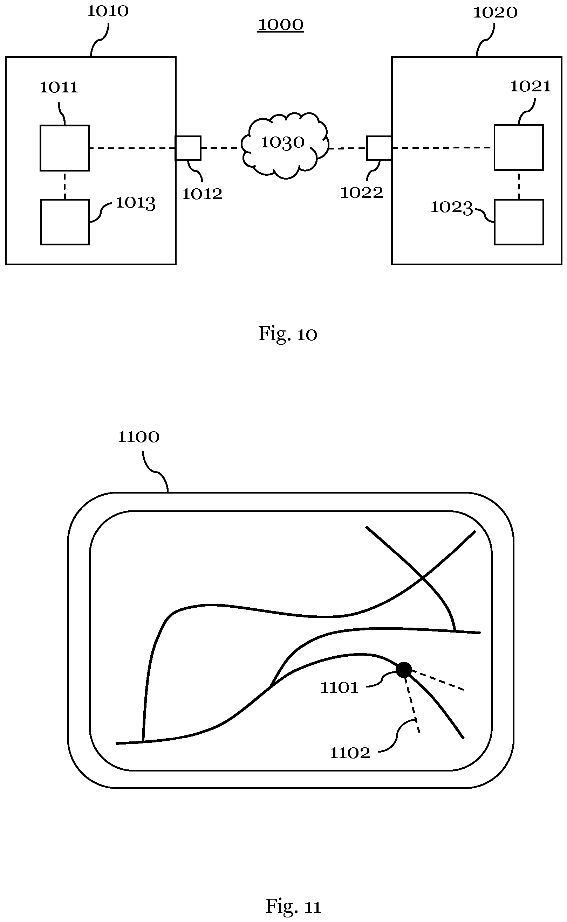

Figure 10 shows an exemplary client-server-system 1000 for map matching according to the second aspect. The client-system system 1000 comprises a client 1010 and a server 1020. The client 1010 comprises a processing unit 1011, a communication unit 1012, and a memory 1013. The server 1020 comprises a processing unit 1021, a communication unit 1022, and a memory 1023. The client 1010 is connected to a network 1030 by means of the communication unit 1012. The server 1020 is connected to the network 1030 by means of the communication unit 1022. The client 1010 is connected to the server 1020 via the network 1030. The processing unit 1011 of the client 1010 is connected to the communication unit 1012 and the memory 1013 for data communication. The processing unit 1021 of the server 1020 is connected to the communication unit 1022 and the memory 1023 for data communication.

In one embodiment, the processing unit 1011 of the client 1010 is configured for providing the first set of match candidates 130 each associated with the first geographic location point 101 and one of the road segments. The processing unit 1011 of the client 1010 is further configured for providing the second geographic location point 102 associated with geographic location point properties. In this context, providing may comprise the steps of reading data from one of the memories 1013, 1023 and/or sending data by means of the communication unit 1012 and/or receiving data by means of the communication unit 1022 and/or storing data to one of the memories 1013, 1023. The processing unit of the server 1020 is configured for determining the second set of match candidates 140 based at least in part on the first set of match candidates 130 and the geographic location point properties associated with the second geographic location point 102. At least one of the processing units 1011, 1021 is further configured for determining the matched location point 202 based at least in part on the second set of match candidates 140.

Figure 11 shows a screen 1100 of a navigation system of the vehicle 901. The screen 1100 displays the matched location point 202 by means of a GUI element 1101. The GUI element 1101 further depicts the heading of the second geographic location point 102 by means of a dashed cone 1102. The dashed cone 1102 is aligned with the road segment on which the vehicle 901 is located on.

In one embodiment, the method 800 is implemented on a computer by means of a computer program that comprises instructions which, when executed by a computer, cause the computer to perform the method 800.

## Claims

1. A computer-implemented method for map matching geographic location points to a road network (110) comprising road segments (111a-111d), the method comprising:
providing (801) a first set of match candidates (130) each associated with a first geographic location point (101) and one of the road segments (111a-111d);
providing (802) a second geographic location point (102) associated with geographic location point properties;
determining (803) a second set of match candidates (140) based at least in part on the first set of match candidates (130) and the geographic location point properties associated with the second geographic location point (102);
wherein the second set of match candidates (140) is associated with transitions (401, 402) from the first set of match candidates (130); and
determining (804) a matched location point (202) based at least in part on the second set of match candidates (140).

2. The computer-implemented method of claim 1, wherein the geographic location point properties associated with the second geographic location point (102) comprise coordinates and a heading.

3. The computer-implemented method of claim 2, wherein the geographic location point properties associated with the second geographic location point (102) further comprise a speed and/or a slope and/or a global navigation satellite system, GNSS, presence.

4. The computer-implemented method of any one of claims 1 to 3, wherein determining the second set of match candidates (140) is further based at least in part on road properties associated with the road segments (111a-111d);
wherein the road properties preferably comprise road segment coordinates and/or an allowed driving direction (221, 222).

5. The computer-implemented method of any one of claims 1 to 4, wherein a match candidate (201a-201c, 202a-202c) comprises an identification of a road segment (111a-111d) of the road network (110) and preferably an offset along the road segment (111a-111d).

6. The computer-implemented method of any one of claims 1 to 5, wherein each match candidate (201a-201c, 202a-202c) in the first and the second set of match candidates (130, 140) is associated with a confidence score.

7. The computer-implemented method of claim 6, wherein determining the second set of match candidates (140) is further based at least in part on the confidence scores associated with the match candidates (201a-201c) in the first set of match candidates (130); and the method preferably further comprising:
determining the confidence score associated with each of the match candidates (202a-202c) in the second set of match candidates (140) based at least in part on the confidence scores associated with the match candidates (201a-201c) in the first set of match candidates (130).

8. The computer-implemented method of claim 6 or 7, wherein the confidence score associated with a given match candidate in the second set of match candidates (140) is based at least in part on a probability for a transition from each match candidate (201a-201c) in the first set of match candidates (130) to a road segment (111a-111d) associated with the given match candidate.

9. The computer-implemented method of any one of claims 6-8, wherein determining the matched location point (202) comprises selecting a match candidate associated with a highest confidence score (411, 421).

10. The computer-implemented method of any one of claims 6 to 9, further comprising:
determining further sets of match candidates for map matching successive geographic location points;
wherein a next set of match candidates is determined based at least in part on a current set of match candidates, the geographic location point properties associated with a next geographic location point, and the confidence scores associated with the match candidates in the current set of match candidates;
wherein the next set of match candidates is associated with transitions (401, 402) from the current set of match candidates;
constructing a graph (400) of the sets of match candidates, the transitions (401, 402), and the confidence scores associated with the match candidates in the sets of match candidates;
determining a matched location point for each geographic location point based at least in part on the total graph (400).

11. The computer-implemented method of any one of the previous claims, wherein providing the first set of match candidates (130) and the second geographic location point (102) comprises receiving or sending a message (903) including the first set of match candidates (130) and the second geographic location point (102); the method preferably further comprising:
sending or receiving a response message (904) including the second set of match candidates (140) or the matched location point (202).

12. The computer-implemented method of any one of claims 1 to 11, wherein providing the second geographic location point (102) comprises selecting a geographic location point from a trace (500) of geographic location points.

13. The computer-implemented method of any one of claims 1 to 12, wherein the matched location point (202) is displayed on a screen (1000) and/or used for a navigation function and/or used as an input for a driver-assistance system.

14. A system comprising means for performing the method of any one of the claims 1 to 13.

15. A computer program comprising instructions which, when executed by a computer, cause the computer to perform the method of any one of the claims 1 to 13.
